(19) Europäisches Patentamt
European Patent Office
Office européen des brevets

(11) **EP 3 979 601 A2**

(12) **EUROPEAN PATENT APPLICATION**

(43) Date of publication:
**06.04.2022 Bulletin 2022/14**

(21) Application number: **21199664.0**

(22) Date of filing: **29.09.2021**

(51) International Patent Classification (IPC):
*H04L 61/4511* (2022.01)   *H04L 67/101* (2022.01)
*H04L 101/677* (2022.01)

(52) Cooperative Patent Classification (CPC):
**H04L 61/1511; H04L 61/6077; H04L 67/101**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.10.2020 IN 202041042793**

(71) Applicant: **Nokia Technologies Oy**
**02610 Espoo (FI)**

(72) Inventors:
• **ISOMÄKI, Markus Sakari**
**02210 Espoo (FI)**
• **ROUT, Bivudendu Pratap**
**560077 Bangalore (IN)**
• **THIEBAUT, Laurent**
**92160 Antony (FR)**
• **HOFFMANN, Klaus**
**80995 Munich (DE)**
• **SINGH, Shubhranshu**
**64342 Seeheim-Jugenheim (DE)**

(74) Representative: **Nokia EPO representatives**
**Nokia Technologies Oy**
**Karakaari 7**
**02610 Espoo (FI)**

(54) **APPARATUS, METHODS, AND COMPUTER PROGRAMS**

(57)   There is provided an apparatus for a domain name resolver configure to: receive from a network entity a request to resolve a domain name for a client send domain name queries corresponding to each of a plurality of user plane functions that may be associated with the client; receive responses to the domain name queries; determine which domain name query response to send for the received request; and send the determined domain name query response to the client.

Fig. 13

**Description**

Field

The present disclosure relates to apparatus, methods, and computer programs, and in particular but not exclusively to apparatus, methods and computer programs for network apparatuses.

Background

A communication system can be seen as a facility that enables communication sessions between two or more entities such as user terminals, access nodes and/or other nodes by providing carriers between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Content may be multicast or uni-cast to communication devices.

A user can access the communication system by means of an appropriate communication device or terminal. A communication device of a user is often referred to as user equipment (UE) or user device. The communication device may access a carrier provided by an access node, and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture that is known is the long-term evolution (LTE) or the Universal Mobile Telecommunications System (UMTS) radio-access technology. Another example communication system is so called 5G radio or new radio (NR) access technology.

Summary

According to a first aspect, there is provided an apparatus for a domain name resolver, the apparatus comprising: at least one processor; and at least one memory including computer program code; the at least one memory and the computer program code being configured to, with the at least one processor, cause the apparatus at least to: receive from a network entity a request to resolve a domain name for a client; send domain name queries corresponding to one or each of a plurality of user plane functions that may be associated with the client; receive responses to the domain name queries; determine which domain name query response to send for the received request; and send the determined domain name query response to the client.

Said network entity may be a session management function and the apparatus may be caused to determine the plurality of user plane functions by receiving addressing information related with these user plane functions from the session management function.

Said network entity may be a session management function and said determination of which domain name query response to send for the received request may comprise receiving from the session management function information on the domain name query response to send for the received request.

Said network entity may be a session management function and said determination of which domain name query response to send for the received request may comprise sending to the session management function a list of associations between an addressing information related with a user plane function and an address in a domain name query response; and receiving from the session management function information on the list of associations.

The request to resolve a domain name may be dependent on at least one property of the client. The at least one property may comprise at least one of a location of the client, a subscription of the client, and a group membership of the client.

According to a second aspect, there is provided an apparatus for a session management function, the apparatus comprising: at least one processor; and at least one memory including computer program code; the at least one memory and the computer program code being configured to, with the at least one processor, cause the apparatus at least to: send, to a plurality of addressing information related with user plane functions in order to guide the domain name resolver processing to resolve a domain name associated with a client; receive, from the domain name resolver, a response relating to at least one of a plurality of user plane functions that may be associated with the client; and select at least one combination of at least one of the user plane functions and an associated Application Server to provide a service to the client based on the received response.

Said selecting may be performed in dependence on a delay from the client to each of the plurality of user plane functions and on a delay from each of the plurality of user plane functions to each of a plurality of Application Servers comprising the associated Application Server.

The request to resolve a domain name may be dependent on at least one property of the client. The at least one property may comprise at least one of a location of the client, a subscription of the client, and a group membership of the client.

According to a third aspect, there is provided an apparatus for a domain name resolver, the apparatus comprising: at least one processor; and at least one memory including computer program code; the at least one memory and the computer program code being configured to, with the at least one processor, cause the apparatus at least to: receive, a request to resolve a domain name associated with a client; determine whether the received domain name matches a predetermined domain name; when the received domain name matches the predetermined domain name, send addressing information for the client and the received domain name to a session management function; and receive from the session management function at least one Application server address of one combination of at least one user plane function and an associated Application Server to provide a service to the client.

The plurality of Application Servers may be dispersed across a home communication network and a Visited communication network.

The determining a plurality of Application Servers may comprise exchanging signalling with the session management function.

According to a fourth aspect, there is provided an apparatus for a session management function, the apparatus comprising: at least one processor; and at least one memory including computer program code; the at least one memory and the computer program code being configured to, with the at least one processor, cause the apparatus at least to: receive from a domain name resolver addressing information related with user plane functions for a client and a domain name; use the received domain name to determine a plurality of Application Servers for providing the service to the client; select at least one combination of at least one of the user plane functions and an associated Application Server to provide a service to the client based on respective delays associated with the at least one combination; and send the at least one Application server address of one combination to the domain name resolver.

The apparatus may be caused to exchange signalling with the at least one user plane function for use with determining the plurality of Application Servers.

The plurality of Application Servers may be dispersed across a home communication network and a Visited communication network.

According to a fifth aspect, there is provided an apparatus for a domain name resolver, the apparatus comprising: means for receiving from a network entity a request to resolve a domain name for a client; means for sending domain name queries corresponding to one or each of a plurality of user plane functions that may be associated with the client; means for receiving responses to the domain name queries; means for determining which domain name query response to send for the received request; and means for sending the determined domain name query response to the client.

Said network entity may be a session management function and the apparatus may comprise means for determining the plurality of user plane functions by receiving addressing information related with these user plane functions from the session management function.

Said network entity may be a session management function and said means for determining which domain name query response to send for the received request may comprise means for receiving from the session management function information on the domain name query response to send for the received request.

Said network entity may be a session management function and said means for determining which domain name query response to send for the received request may comprise means for sending to the session management function a list of associations between an addressing information related with a user plane function and an address in a domain name query response; and means for receiving from the session management function information on the list of associations.

The request to resolve a domain name may be dependent on at least one property of the client. The at least one property may comprise at least one of a location of the client, a subscription of the client, and a group membership of the client.

According to a sixth aspect, there is provided an apparatus for a session management function, the apparatus comprising: means for sending, to a plurality of addressing information related with user plane functions in order to guide the domain name resolver processing to resolve a domain name associated with a client; means for receiving, from the domain name resolver, a response relating to at least one of a plurality of user plane functions that may be associated with the client; and means for selecting at least one combination of at least one of the user plane functions and an associated Application Server to provide a service to the client based on the received response.

Said selecting may be performed in dependence on a delay from the client to each of the plurality of user plane functions and on a delay from each of the plurality of user plane functions to each of a plurality of Application Servers comprising the associated Application Server.

The request to resolve a domain name may be dependent on at least one property of the client. The at least one property may comprise at least one of a location of the client, a subscription of the client, and a group membership of the client.

According to a seventh aspect, there is provided an apparatus for a domain name resolver, the apparatus comprising: means for receiving, a request to resolve a domain name associated with a client; means for determining whether the received domain name matches a predetermined domain name; means for, when the received domain name matches the predetermined domain name, sending addressing information for the client and the received domain name to a session management function; and means for receiving from the session management function at least one Application server address of one combination of at least one user plane function and an associated Application Server to provide a service to the client.

The plurality of Application Servers may be dispersed across a home communication network and a Visited communication network.

The means for determining a plurality of Application Servers may comprise means for exchanging signalling with the session management function.

According to an eighth aspect, there is provided an apparatus for a session management function, the apparatus comprising: means for receiving from a domain name resolver addressing information related with user plane functions for a client and a domain name; means for using the received domain name to determine a plurality of Application Servers for providing the service to the client; means for selecting at least one combination of at least one of the user plane functions and an associated Application Server to provide a service to the client based on respective delays associated with the at least one combination; and means for sending the at least one the at least one Application server address of one combination to the domain name resolver.

The apparatus may comprise means for exchanging signalling with the at least one user plane function for use with determining the plurality of Application Servers.

The plurality of Application Servers may be dispersed across a home communication network and a Visited communication network.

According to a ninth aspect, there is provided a method for an apparatus for a domain name resolver, the method comprising: receiving from a network entity a request to a resolve domain name for a client; sending domain name queries corresponding to one or each of a plurality of user plane functions that may be associated with the client; receiving responses to the domain name queries; determining which domain name query response to send for the received request; and sending the determined domain name query response to the client.

Said network entity may be a session management function and the method may comprise determining the plurality of user plane functions by receiving addressing information related with these user plane functions from the session management function.

Said network entity may be a session management function and said determining which domain name query response to send for the received request may comprise receiving from the session management function information on the domain name query response to send for the received request.

Said network entity may be a session management function and said determining which domain name query response to send for the received request may comprise: sending to the session management function a list of associations between an addressing information related with a user plane function and an address in a domain name query response; and receiving from the session management function information on the list of associations.

The request to resolve a domain name may be dependent on at least one property of the client. The at least one property may comprise at least one of a location of the client, a subscription of the client, and a group membership of the client.

According to a tenth aspect, there is provided a method for an apparatus for a session management function, the method comprising: sending, to at least one of a plurality of addressing information related with user plane functions in order to guide the domain name resolver processing to resolve a domain name associated with a client; receiving, from the domain name resolver, a response relating to a plurality of user plane functions that may be associated with the client; and selecting at least one combination of at least one of the user plane functions and an associated Application Server to provide a service to the client based on the received response.

Said selecting may be performed in dependence on a delay from the client to each of the plurality of user plane functions and on a delay from each of the plurality of user plane functions to each of a plurality of Application Servers comprising the associated Application Server.

The request to resolve a domain name may be dependent on at least one property of the client. The at least one property may comprise at least one of a location of the client, a subscription of the client, and a group membership of the client.

According to an eleventh aspect, there is provided a method for an apparatus for a domain name resolver, the method comprising: receiving, a request to resolve a domain name associated with a client; determining whether the received domain name matches a predetermined domain name; when the received domain name matches the predetermined domain name, sending addressing information for the client and the received domain name to a session management function; and receiving from the session management function at least one Application server address of one combination of at least one user plane function and an associated Application Server to provide a service to the client.

The plurality of Application Servers may be dispersed across a home communication network and a Visited communication network.

The determining a plurality of Application Servers may comprise exchanging signalling with the session management function.

According to a twelfth aspect, there is provided a method for an apparatus for a session management function, the method comprising: receiving from a domain name resolver addressing information related with user plane functions for a client and a domain name; using the received domain name to determine a plurality of Application Servers for providing the service to the client; selecting at least one combination of at least one of the user plane functions and an associated Application Server to provide a service to the client based on respective delays associated with the at least one combination; and sending the at least one the at least one Application server address of one combination to the domain name resolver.

The method may comprise exchanging signalling with the at least one user plane function for use with determining the plurality of Application Servers.

The plurality of Application Servers may be dispersed across a home communication network and a Visited communication network.

According to a thirteenth aspect, there is provided an apparatus for a domain name resolver, the apparatus comprising: receiving circuitry for receiving from a network entity a request to resolve a domain name for a client; send domain name queries corresponding to one or each of a plurality of user plane functions that may be associated with the client; receiving circuitry for receiving responses to the domain name queries; determining circuitry for determining which domain name query response to send for the received request; and sending circuitry for sending the determined domain name query response to the client.

Said network entity may be a session management function and the apparatus may comprise determining circuitry for determining the plurality of user plane functions by receiving addressing information related with these user plane functions from the session management function.

Said network entity may be a session management function and said determining circuitry for determining which domain name query response to send for the received request may comprise receiving circuitry for receiving from the session management function information on the domain name query response to send for the received request.

Said network entity may be a session management function and said determining circuitry for determining which domain name query response to send for the received request may comprise sending circuitry for sending to the session management function a list of associations between an addressing information related with a user plane function and an address in a domain name query response; and receiving circuitry for receiving from the session management function information on the list of associations.

The request to resolve a domain name may be dependent on at least one property of the client. The at least one property may comprise at least one of a location of the client, a subscription of the client, and a group membership of the client.

According to a fourteenth aspect, there is provided an apparatus for a session management function, the apparatus comprising: sending circuitry for sending, to a plurality of addressing information related with user plane functions in order to guide the domain name resolver processing to resolve a domain name associated with a client; receiving circuitry for receiving, from the domain name resolver, a response relating to at least one of a plurality of user plane functions that may be associated with the client; and selecting circuitry for selecting at least one combination of at least one of the user plane functions and an associated Application Server to provide a service to the client based on the received response.

Said selecting may be performed in dependence on a delay from the client to each of the plurality of user plane functions and on a delay from each of the plurality of user plane functions to each of a plurality of Application Servers comprising the associated Application Server.

The request to resolve a domain name may be dependent on at least one property of the client. The at least one property may comprise at least one of a location of the client, a subscription of the client, and a group membership of the client.

According to a fifteenth aspect, there is provided an apparatus for a domain name resolver, the apparatus comprising: receiving circuitry for receiving a request to resolve a domain name associated with a client; determining circuitry for determining whether the received domain name matches a predetermined domain name; sending circuitry for, when the received domain name matches the predetermined domain name, sending addressing information for the client and the received domain name to a session management function; and receiving circuitry for receiving from the session management function at least one Application server address of one combination of at least one user plane function and an associated Application Server to provide a service to the client.

The plurality of Application Servers may be dispersed across a home communication network and a Visited communication network.

The determining circuitry for determining a plurality of Application Servers may comprise exchanging circuitry for exchanging signalling with the session management function.

According to a sixteenth aspect, there is provided an apparatus for a session management function, the apparatus comprising: receiving circuitry for receiving from a domain name resolver addressing information related with user plane functions for a client and a domain name; using circuitry for using the received domain name to determine a plurality of Application Servers for providing the service to the client; selecting circuitry for selecting at least one combination of at least one of the user plane functions and an associated Application Server to provide a service to the client based on respective delays associated with the at least one combination; and sending circuitry for sending the at least one the at least one Application server address of one combination to the domain name resolver.

The apparatus may comprise exchanging circuitry for exchanging signalling with the at least one user plane function for use with determining the plurality of Application Servers.

The plurality of Application Servers may be dispersed across a home communication network and a Visited communication network.

According to a seventeenth aspect, there is provided non-transitory computer readable medium comprising program instructions for causing a network apparatus for a domain name resolver to perform at least the following: receive from a network entity a request to resolve a domain name for a client; send domain name queries corresponding to one or each of a plurality of user plane functions that may be associated with the client; receive responses to the domain name queries; determine which domain name query response to send for the received request; and send the determined domain name query response to the client.

Said network entity may be a session management function and the apparatus may be caused to determine the plurality of user plane functions by receiving addressing information related with these user plane functions from the session management function.

Said network entity may be a session management function and said determination of which domain name query response to send for the received request may comprise receiving from the session management function information on the domain name query response to send for the received request.

Said network entity may be a session management function and said determination of which domain name query response to send for the received request may comprise sending to the session management function a list of associations between an addressing information related with a user plane function and an address in a domain name query response; and receiving from the session management function information on the list of associations.

The request to resolve a domain name may be dependent on at least one property of the client. The at least one property may comprise at least one of a location of the client, a subscription of the client, and a group membership of the client.

According to an eighteenth aspect, there is provided non-transitory computer readable medium comprising program instructions for causing a network apparatus for a session management function to perform at least the following: send, to a plurality of addressing information related with user plane functions in order to guide the domain name resolver processing to resolve a domain name associated with a client; receive, from the domain name resolver, a response relating to at least one of a plurality of user plane functions that may be associated with the client; and select at least one combination of at least one of the user plane functions and an associated Application Server to provide a service to the client based on the received response.

Said selecting may be performed in dependence on a delay from the client to each of the plurality of user plane functions and on a delay from each of the plurality of user plane functions to each of a plurality of Application Servers comprising the associated Application Server.

The request to resolve a domain name may be dependent on at least one property of the client. The at least one property may comprise at least one of a location of the client, a subscription of the client, and a group membership of the client.

According to a nineteenth aspect, there is provided non-transitory computer readable medium comprising program instructions for causing a network apparatus for a domain name resolver to perform at least the following: receive, a request to resolve a domain name associated with a client; determine whether the received domain name matches a predetermined domain name; when the received domain name matches the predetermined domain name, send addressing information for the client and the received domain name to a session management function; and receive from the session management function at least one Application server address of one combination of at least one user plane function and an associated Application Server to provide a service to the client.

The plurality of Application Servers may be dispersed across a home communication network and a Visited communication network.

The determining a plurality of Application Servers may comprise exchanging signalling with the session management function.

According to a twentieth aspect, there is provided non-transitory computer readable medium comprising program instructions for causing a network apparatus for a session management function to perform at least the following: receive from a domain name resolver addressing information related with user plane functions for a client and a domain name;

use the received domain name to determine a plurality of Application Servers for providing the service to the client; select at least one combination of at least one of the user plane functions and an associated Application Server to provide a service to the client based on respective delays associated with the at least one combination; and send the at least one the at least one Application server address of one combination to the domain name resolver.

The apparatus may be caused to exchange signalling with the at least one user plane function for use with determining the plurality of Application Servers.

The plurality of Application Servers may be dispersed across a home communication network and a Visited communication network.

According to a twenty first aspect, there is provided a computer program comprising program instructions for causing a computer to perform any method as described above.

According to a twenty second aspect, there is provided a computer program product stored on a medium may cause an apparatus to perform any method as described herein.

According to a twenty third aspect, there is provided an electronic device that may comprise apparatus as described herein.

According to a twenty fourth aspect, there is provided a chipset that may comprise an apparatus as described herein.

According to a twenty fifth aspect, there is provided an apparatus for a domain name resolver, the apparatus comprising: at least one processor; and at least one memory including computer program code; the at least one memory and the computer program code being configured to, with the at least one processor, cause the apparatus at least to: receive, a request to resolve a domain name associated with a client; determine that a plurality of user plane functions may be associated with the client; determine, without issuing a domain name query, a plurality of Application Servers that may serve the client; send to a session management function an indication of the plurality of user plane functions; and send to the session management function an indication of the plurality of Application Servers.

The plurality of Application Servers may be dispersed across a home communication network and a Visited communication network.

The determining a plurality of Application Servers may comprise exchanging signalling with the session management function.

According to a twenty sixth aspect, there is provided an apparatus for a session management function, the apparatus comprising: at least one processor; and at least one memory including computer program code; the at least one memory and the computer program code being configured to, with the at least one processor, cause the apparatus at least to: receive from a domain name resolver an indication of a plurality of user plane functions for providing a service to a client; receive from the domain name resolver an indication of a plurality of Application Servers for providing the service to a client; and select at least one combination of at least one of the user plane functions and an associated Application Server to provide a service to the client based on the received response.

The apparatus may be caused to exchange signalling with the domain name resolver for use with determining the plurality of Application Servers.

The plurality of Application Servers may be dispersed across a home communication network and a Visited communication network.

Various other aspects are also described in the following detailed description and in the attached claims.

*Brief description of Figures*

Embodiments will now be described, by way of example only, with reference to the accompanying Figures in which:

    Figure 1 shows a schematic representation of a 5G system;
    Figure 2 shows a schematic representation of a network apparatus;
    Figure 3 shows a schematic representation of a user equipment;
    Figure 4 shows a schematic representation of a non-volatile memory medium storing instructions which when executed by a processor allow a processor to perform one or more of the steps of the methods of some embodiments;
    Figure 5 shows a schematic of an example network architecture;
    Figures 6 to 9 show example signaling between different elements in a communication network;
    Figure 10 shows a schematic of an example network architecture;
    Figure 11 shows example signaling between different elements in a communication network;
    Figure 12 shows an example DNS query; and
    Figures 13 to 16 are flow charts illustrating potential operations that may be performed by presently described network entities.

Detailed description

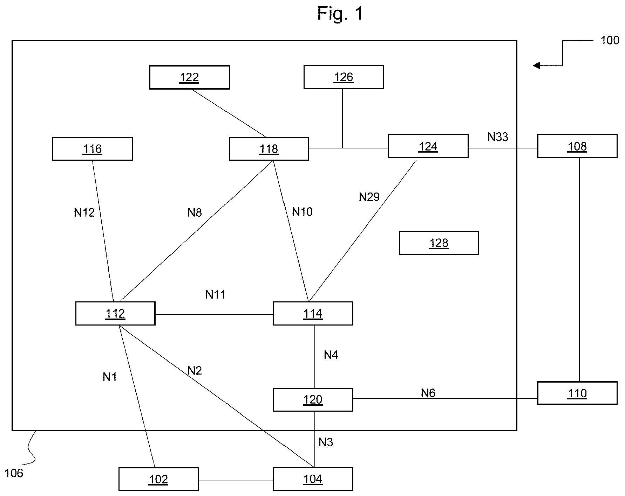

In the following certain embodiments are explained with reference to mobile communication devices capable of communication via a wireless cellular system and mobile communication systems serving such mobile communication devices. Before explaining in detail the exemplifying embodiments, certain general principles of a 5G wireless communication system are briefly explained with reference to Figure 1.

Figure 1 shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

**The** 5G RAN may comprise one or more gNodeB (gNB) distributed unit functions connected to one or more gNodeB (gNB) centralized unit functions. The RAN may comprise one or more access nodes.

The 5GC 106 may comprise one or more access management functions (AMF) 112, one or more session management functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. Although NRF 128 is not depicted with its interfaces, it is understood that this is for clarity reasons and that NRF 128 may have a plurality of interfaces with other network functions.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

The 5GC (5G Core network) has been defined as a Service Based Architecture (SBA). Service-Based Architectures provide a modular framework from which common applications can be deployed using components of varying sources and suppliers. Control plane functionality and common data repositories of a 5G network may thus be delivered by way of a set of interconnected Network Functions (NFs), each with authorization to access each other's services, with Network Function (NF) service producers exposing services to NF service consumers. NFs may act as service consumers and/or service providers. NF service providers register their NF profile in a Network Repository Function (NRF). An NRF maintains an updated repository of 5G elements available in the operator's network, along with the services provided by each of the elements in the 5G core that are expected to be instantiated, scaled and/or terminated without or minimal manual intervention. In other words, the NRF maintains a record of available NF instances and their supported services. The NRF allows other NF instances to subscribe and be notified of registrations from NF instances of a given type. The NRF may support service discovery, by receipt of Discovery Requests from NF instances and details which NF instances support specific services. Therefore NF Service consumers or Service Communication Proxies (SCP) (which obtain NF services on behalf of another network entity) may discover NF service producers by performing for example, an NF Discovery procedure towards the NRF.

Different functions of a client application on a UE may be considered in terms of a user plane and a control plane. At the user plane, the application creates data packets that are processed by transport protocols such as the Transport Control Protocol (TCP), the User Datagram Protocol (UDP) and the Internet Protocol (IP). At the control plane, the radio resource control (RRC) protocol may write the signalling messages that are exchanged between the access node to the network and the UE hosting the client application.

In 5G, user plane functions have at least partly manifested in a functional entity called the User Plane Function (UPF). According to current specifications, the UPF provides a number of different functions. For example, the UPF provides an interconnect point between the mobile infrastructure and the Data Network (DN), i.e. encapsulation and decapsulation of GPRS Tunneling Protocol for the user plane (GTP-U). As another example, the UPF provides a Protocol Data Unit (PDU) session anchor point (PDU Session Anchor) for providing mobility within and between Radio Access Technologies (RATs), including sending one or more end marker packets to the gNB. A UE may thus receive services through a Protocol Data Unit (PDU) session, which is a logical connection between the UE and data network. In NextGen, various PDU session types are supported, e.g., IPv4, IPv6, Ethernet, etc.

3GPP is working on further enhancements to edge computing in Release 17. The current solutions and conclusions are documented in 3GPP TR 23.748. One of the key issues relates to the discovery of an Edge Application Server (Application Server) by a Client application resident in a UE, which will be referred to herein as a UE client. One approach for this is to utilize the Domain Name System (DNS). The end result should be that the UE client is given the "best" Application Server instance and its traffic to the Application Server is routed via the "optimal" 5G System (5GS) User Plane Function (UPF). In this instance, the "best" Application Server instance is determined using a predefined set of criteria, which may be weighted in different ways. As an example, Application Server instances that are closest to the UE client may be commonly considered to be the best Application Server instance. Similarly, the "optimal" UPF may be determined by applying a different set of predefined criteria, which may be weighted in different ways. As an example, the optimal UPF may be commonly determined to be the one offering the shortest route. Selection of an appropriate Application Server instance and UPF may be important for applications requiring low latency, such as cloud based gaming or virtual reality.

A large 5GS network may include multiple geographically distributed UPFs that can serve as PDU Session Anchors to a UE's PDU sessions. PDU Session Anchor is the term given to the UPF (User Plane Function) which terminates the N6 interface of a PDU session within a 5G core network.

A single PDU session may even be served by multiple PDU Session Anchors, with traffic split among them based on traffic filters set by the Session Management Function (SMF). One example of this is when a UE is communicating with Application Servers close to the UEs location, the traffic from the UE to those Application Servers may be routed via a locally deployed PDU Session Anchor UPF, while the rest of UEs traffic is still routed via a more centrally deployed PDU Session Anchor UPF.

Popular Internet services may be distributed in multiple geographical locations. The trend is that low latency services are distributed in more and more locations close to the edge of the network so that they can offer good quality service to users in as many locations as possible. One approach to map a mobile client (e.g. a client in a 5G UE) in a specific location to the closest Application Server instance is by the use of a Domain Name System (DNS) mechanism. An authoritative DNS server may have a database to provide a "best" matching Application Server address to the UE based on the client's IP address. Typically, a DNS client would not directly signal the authoritative DNS server, but would instead signal indirectly to the authoritative DNS server using a DNS resolver. In case the client's IP address and resolver's IP address are geographically disperse, the DNS resolver may use a special DNS extension to include tee client's IP address for the authoritative server to see.

This approach is not always accurate and can be extremely inaccurate in a large 5GS network where the UE's IP address does not depend on the UE's location. To alleviate that, current discussions consider the concept of an especially capable Local DNS Resolver (Local DNS resolver) that may insert a client IP address into the signaling for revealing the UE client's geographic location more accurately than the UE's centrally allocated IP address. For instance, if the UE is in an area close to a specific local PDU Session Anchor UPF, the Local DNS may insert that UPF's IP address (or IP subnet) to a DNS query to the authoritative DNS server. If the authoritative DNS server's response indicates that the chosen Application Server address has been selected specifically based on the PDU Session Anchor UPF's IP address, the 5GS Session Management Function may set a traffic filter forwarding UE's traffic to that Application Server via the local PDU Session Anchor UPF.

The limitation of the approach so far described in 3GPP is that if the 5GS has multiple candidate PDU Session Anchor UPFs for a client's PDU session (or Data Networks it connects to), the Local DNS resolver can only ask the authoritative DNS server the best Application Server for one of them. This may not lead to an optimal result for the lowest UE to Application Server delay, which may be desirable criteria for the Application Server selection.

This is illustrated in the following example. In this example, a UE is associated with a first UPF, UPF1, and a second UPF, UPF2, and two Application servers are considered, Application Server1 and Application Server2.

The signaling delay from the UE to UPF1 is assumed to be 3 ms. The signaling delay from the UE to UPF2 is assumed to be 10 ms. The signaling delay from UPF1 to Application Server1 is assumed to be 10 ms. The signaling delay from UPF1 to Application Server2 is assumed to be 15 ms. The signaling delay from UPF2 to Application Server1 is assumed to be 1 ms. The signaling delay from UPF2 to Application Server2 is assumed to be 10 ms.

If, in this example, the Local DNS resolver inserts UPF1's IP subnet when forming the UE's DNS query, the authoritative DNS server (if it has reasonably accurate information) would return Application Server1. The Session Management Function would then setup the route via UPF1. End-to-end delay between UE and Application Server1 would be 3 + 10 = 13 ms. However, it can be seen from the above values that the optimal result would be to instead use UPF2 and Application Server2, which has an end-to-end delay of 10 + 1 = 11 ms. An additional benefit of that selection would be that Quality of Service for most of the path could be guaranteed by 5GS. It is understood that these values provide only one example, and that other examples may utilize different vales for the communication delays.

Therefore, a mechanism for better selecting a combination of UPF and Application Server would be useful.

Some mechanisms for selecting combinations of UPFs and Application servers have been considered.

In a first example mechanism, an application function may explicitly request a certain delay (or no more than a certain delay) between the UE and the UPF. This delay may be set in terms of a Maximum allowed user plane latency. The value of the Maximum allowed user plane latency may be considered to be the target user plane latency. The request may be made to a Session Management Function that is configured to make a decision on a UPF and Application Server combination. The Session Management Function may use this value to ensure the user plane latency between the UE to the PDU Session Anchor UPF. The Session Management Function may use this value to decide whether to relocate the PDU Session Anchor UPF to satisfy the user plane latency after the potential relocation.

In a second example mechanism, the Application function may be notified about a resulting delay between the UE and the PDU Session Anchor UPF. In this case, if an SMF detects a trigger condition for a user plane path change event and if the SMF is configured to report the estimated user plane latency information per Domain Name, the SMF sends the target Data Network Access Identifier (DNAI) and their estimated user plane latency information between the UE and the PSA-UPF corresponding to the target DNAI.

In a third example mechanism, an edge Application Server is selected without considering any End-to-End Quality of Service requirements, with a Local DNS resolver forwarding DNS Reponses to the Session Management Function.

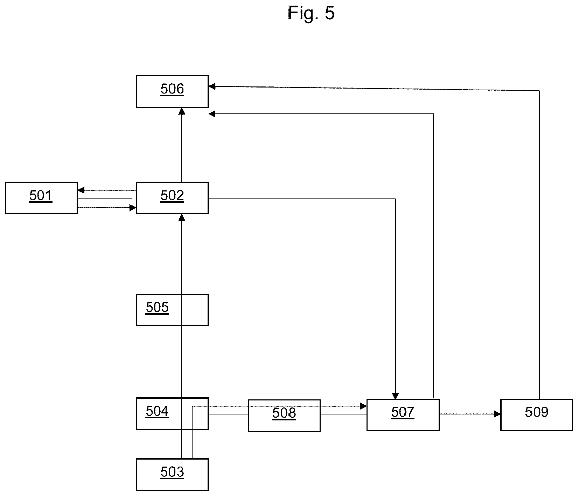

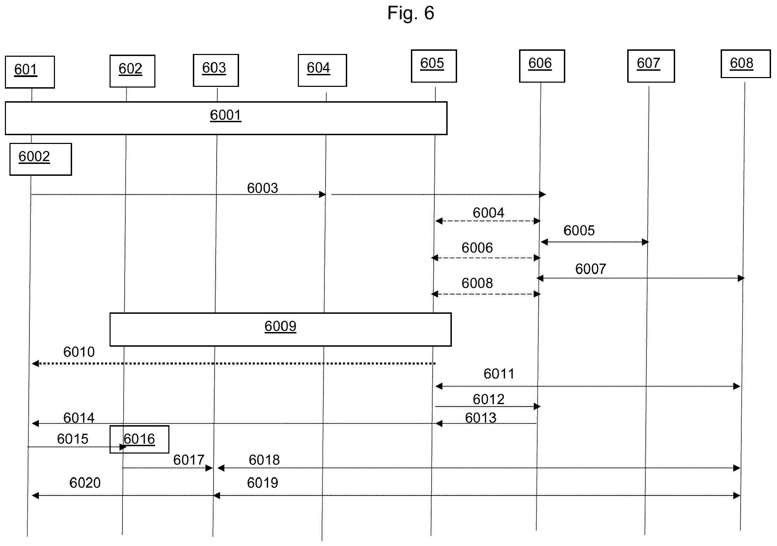

Some mechanisms for selecting a combination of UPF and Application Server are discussed in relation to Figures 5 and 6.

Figure 5 illustrates three message paths for selecting a combination of UPF and Application Server. A Session Management Function 501 in combination with a Local DNS function 502. The Local DNS Function 502 may receive DNS queries from a UE 503 via an uplink classifier/branching point 504 and a remote PDU Session Anchor 505. The Local DNS Function 502 may also send queries to a C-DNS server 506 and a Local DNS resolver 507. The classifier/branching point 504 and the UE (through the classifier/branching point 504) may also send queries to the Local DNS resolver 507 through a local PDU Session Anchor 508.The results of queries to the Local DNS resolver 507 may be output to C-DNS server 506 either directly or through a Local DNS server 509.

The different signals that may be exchange in the architecture of Figure 5 are illustrated with respect to Figure 6.

Figure 6 shows signaling between a UE 601, a UE classifier/branching point 602, a local PDU Session Anchor 603, a first PDU Session Anchor 604, a Session Management Function 605, an Local DNS function 606, a C-DNS server 607 and a Local DNS server/resolver 608.

At 6001, the UE establishes a PDU session with the first PDU Session Anchor 604. The exact signaling for this is not shown for simplicity.

At 6002, the UE 601 triggers a DNS query. This may be the result of a predetermined condition being fulfilled.

At 6003, the UE 601 sends a DNS query to the first PDU Session Anchor 604.

At 6004, the first PDU Session Anchor 604 forwards the DNS query received at 6003 to Local DNS function 606.

At 6005, the Local DNS function 606 exchanges signaling with the Session Management Function 605.

As a first option, at 6006 the Local DNS function 606 sends (and receives a response to) a DNS query to C-DNS server 607. At 6007, the Local DNS function 606 notifies the Session Management Function 605 of the response received in 6006.

As a second option, at 6008 the Local DNS function 606 sends (and receives a response to) a DNS query to Local DNS server/resolver 608. At 6009, the Local DNS function 606 notifies the Session Management Function 605 of the response received in 6008.

At 6010, the Session Management Function 605 decides a Data Network Access Identifier (DNAI) and performs uplink classifier/local PDU Session Anchor selection and set up. A DNAI is an operator defined identifier of a user plane access to one or more data networks where applications are deployed. The DNAI and uplink classifier/Local PDU Session Anchor may be selected based on information provided by the Local DNS resolver 606 to ensure the selected local PDS Session Anchor and Edge Application Server correspond to the same DNAI.

At 6011, the Session Management Function 605 sends a router advertisement to the UE 601.

As a third option, at 6012, the Local DNS function 606 sends (and receives a response to) a DNS query to Local DNS server/resolver 608. At 6013, the Local DNS function 606 notifies the Session Management Function 605 of the response received in 6012.

In this option, the Session Management Function instructs the Local DNS resolver to forward DNS queries to the Session Management Function, which in turn forwards this to the local DNS. Consequently responses from the local DNS are forwarded back to the Session Management Function and then to the Local DNS resolver.

If the Local DNS resolver sent a DNS query to the Session Management Function in 6008, the Session Management Function may send the DNS query to the address of the local DNS server via the Local PDU Session Anchor 604. The Session Management Function may configure the Local PDU Session Anchor to forward the DNS response to the Session Management Function. When receiving the DNS response, the Session Management Function forwards it to the Local DNS resolver. After receiving the DNS response, the Local DNS resolver may notify the Session Management Function with IP address of Application Server as in the first and second options. The Session Management Function may perform update of the ULclassifier/L-PDU Session Anchor based on this notification as in the first and second options. This third option may be useful when there is no direct connectivity between Local DNS resolver and Local DNS, and so the Local DNS resolver requests the Session Management Function to forward a DNS query.

At 6014, the Session Management Function 605 returns the DNS response of 6014 to the UE 601.

In all of these options, the Session Management Function instructs the Local DNS resolver to forward the whole DNS query to the Session Management Function and the Session Management Function forwards the DNS query to the local DNS server. Furthermore, these mechanisms use only one single preselected UPF, which heavily limits the selection of optimal end-to-end delay /Quality of Service Application Server because just one randomly preselected UPF is the base for selecting the Edge Application Server.

The above signaling options may be useful for dynamically selecting an uplink classifier/branching point, local PDU Session Anchor and filter. When the uplink classifier/branching point, local PDU Session Anchor and filter have already been preestablished, a different signaling mechanism may be used.

For this mechanism, at 6015, the UE 601 sends a DNS query to the uplink classifier/branching point 602.

At 6016, the uplink classifier/branching point 602 performs traffic filtering.

At 6017, the uplink classifier/branching point 602 signals the local PDU Session Anchor 603.

At 6018, the local PDU Session Anchor 603 sends a DNS query to the Local DNS server 608.

At 6019, the local PDU Session Anchor 603 receives a response to the DNS query sent at 6018.

At 6020, the local PDU Session Anchor 603 sends the response received at 6020 to the UE 601.

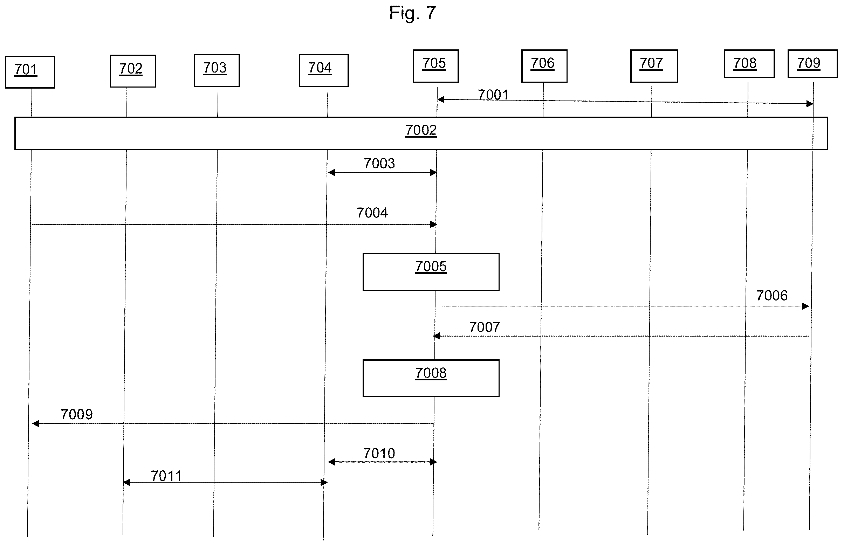

Figure 7 illustrates an example of how a delay across an N6 interface (i.e. an interface between a user plane function and a data network) can be measured.

Figure 7 shows signaling between a UE 701, a (radio) access network 702, an access and mobility function (AMF) 703, a session management function 704, a PDU Session Anchor UPF (PSA UPF) 705, a policy control function 706, a network exposure function 707, an application function 708 and a server 709.

At 7001, a time synchronization is established between server 709 and PSA UPF 705.

**At** 7002, a PDU session is established for a client on the UE 701.

**At** 7003, the SMF 704 configures the PSA UPF 705 over an interface between them (e.g. the N4 interface) for performing a delay measurement on the N6 interface.

**At** 7004, the US 701 signals an uplink data packet to the PSA UPF 705.

**At** 7005, the PSA UPF 705 identifies the data packet and inserts delay measurement indication into a header of the data packet to trigger a delay measurement. For example, this indication may be inserted into an IPv6 extension header or an in-band telemetry (INT) header.

**At** 7006, the PSA UPF 705 sends the modified data packet/header to server 709.

**At** 7007, the server 709 responds to the PSA UPF's 705 data packet of 7006 with a response that includes a time stamp.

**At** 7008, the PSA UPF 705 identifies the response, extracts the timestamp from the response and calculates the N6 delay.

**At** 7009, the PSA UPF 705 sends a downlink data packet to the UE 701.

**At** 7010, the PSA UPF 705 reports the N6 delay calculated at 7008 to the SMF 704.

**At** 7011, the SMF 704 sends a calculate Burst Arrival Time to the access network 702 via the AMF 703.

Several protocols are used for various DNS mechanisms. For example, RFC 7871 defines an option to convey network information that is relevant to a DNS message, in order to carry sufficient network information about the originator of a message for the authoritative nameserver to tailor responses.

As another example, RFC 1035 describes the DNS protocol.

The following considers alternative mechanisms for selecting combinations of UPFs and Application servers.

In a first example mechanism, a Local DNS resolver issues DNS queries on behalf of multiple PDU Session Anchor UPFs.

For example, based on a Fully Qualified Domain Name and/or domain specific instructions given by the Session Management Function, the Local DNS resolver may issue DNS queries from the perspective of every relevant PDU Session Anchor UPF and provide the results to the Session Management Function. This is in contrast to the previously described mechanisms in which the DNS query was made only from the perspective of a single "local" PDU Session Anchor UPF. The instructions sent by Session Management Function may depend on properties of the UE, such as, for example, current location, subscription, group membership, etc.

A Fully Qualified Domain Name (FQDN) may be considered to be a domain name that specifies its exact location in the tree hierarchy of the Domain Name System (DNS). It specifies all domain levels, including the top-level domain and the root zone. A fully qualified domain name can be interpreted only in one way. It usually consists of a host name and at least one higher-level domain (label) separated by the symbol "." and ends in the top-level domain.

After receiving all of the query responses, the SMF considers the responses and may consider both the delay/Quality of Service requirements from the UE to each candidate PDU Session Anchor UPF and from each candidate PDU Session Anchor UPF to each candidate Application Server before selecting a PDU Session Anchor UPF and Application Server combination that it considers to be optimal from a UE-Application server end-to-end delay/ Quality of Service perspective.

This example has several advantages over previously described examples from a system architecture and standardization perspective. For instance, the Local DNS resolver may be considered as acting more like a "normal" DNS resolver from the perspectives of the UE and authoritative DNS server; the primary difference being that the Local DNS resolver may perform multiple queries toward the authoritative DNS server(s) based on a single UE query. Further, the SMF and Local DNS resolver roles are split so Session Management Function does not need to become intimately aware of DNS specific operations while Local DNS resolver does not need to become aware of 5GS internal details.

In a second example mechanism, the Local DNS resolver with the help of the Session Management Function may provide a list of possible Application Servers that can serve the UE current location for a particular Fully Qualified Domain Name, without contacting the DNS server. In other words, the Local DNS resolver server may act as an authoritative DNS server.

In such a case, the Application Servers identified/determined by the Local DNS resolver may be provided to the Session Management Function, which may then select a UPF and Application Server pair combination. This may be performed by measuring and/or retrieving an end-to-end delay between the UE and Application Servers that can serve the UE best at that time for all these UPF and Application Server combinations.

This second mechanism has a number of advantages from a system architecture and standardization perspective. For example, there is no need to allocate multiple Local DNS resolvers in parallel as the network takes the role of the authoritative DNS server. Therefore, the Local DNS resolver acts the front end of authoritative DNS server in the Session Management Function and does not need to send multiple DNS queries in parallel. The Local DNS resolver may thus only decrypt/encrypt DNS protocol while it waits for feedback decision on UPF and Application Server selection from the Session Management Function.

An extension of this second mechanism can be applied to a home-routed roaming case, which is not currently considered in previous mechanisms. Compared to the second mechanism, the Session Management Function in the Home PLMN may also take into account also the Visitor UPFs located in the Visitor PLMN together with the Home UPFs in the Home PLMN in order to select the best suited chain of Visitor UPF and/or Home UPF between UE and Edge Application Server for the end-to-end Quality of Service in question One single Local DNS resolver may be sufficient.

These two mechanisms will be discussed in more detail in the following specific examples, before returning to a more general overview of the presently described principles.

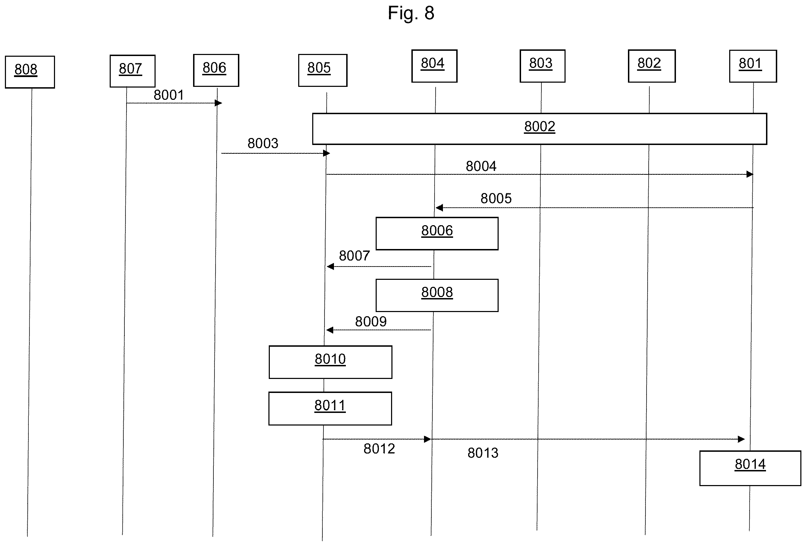

The first mechanism (i.e. the multiple DNS query mechanism) is now described in relation to Figure 8.

Figure 8 is a signaling diagram showing signaling that may be performed between a UE DNS client 801, a radio access network 802, a UPF 803, a Local DNS resolver 804, a Session Management Function 805, core network entities (e.g. NEF/PCF, etc.) 806, an application function 807, and an Authoritative DNS server 808.

These entities may have a range of different functions. For example, the UE DNS client may issue a DNS query for a Fully Qualified Domain Name and be configured to send the query via Local DNS resolver. The Local DNS resolver may serve queries from the UE and be able to communicate with Session Management Function. Session Management Function may manage UE user plane connectivity, including allocating UPFs and setting filtering rules on which traffic flows are directed to which PDU Session Anchor UPF. The Session Management Function may be aware of delays present in the UPF-Application Server paths and be able to communicate with the Local DNS resolver. The UPF may be arranged to provide user plane connectivity for a UE's PDU session to a specific data network. The UPF may be configured by the Session Management Function and be represented by an IP subnet in a sense of IP geomapping. The Authoritative DNS server may be able to put Application Server instances in a priority order based on a client's IP subnet ("IP geomapping"). The Application Function may provide 5G System information about Quality of Service requirements or policies specific to a Fully Qualified Domain Name via a Network Exposure Function (NEF) application programming interface (API).

Several assumptions may be made about the signaling entities of Figure 8. For example, there may be multiple Application Server (Application Server) instances that a specific Fully Qualified Domain Name (Fully Qualified Domain Name) maps to. Moreover, there may be multiple PDU Session Anchor User Plane Function instances that can serve a UE's traffic for a specific PDU session to a specific Data Network. Which PDU Session Anchor UPF instances are meaningful may depend on a UE's current location.

When a UE's DNS client makes a DNS query for the Fully Qualified Domain Name, the DNS may return the client with an Application Server instance and the 5GS will route the UE's traffic to the Application Server instance via a specific PDU Session Anchor UPF instance in such a way that the Application Server instance and UPF instance pair is optimal among all possible pairs according to the chosen metric. An example of a meaningful metric is the end-to-end Quality of Service/delay between the UE and the Application Server (via the UPF) so that will be considered in the following. Therefore, in the following focuses on the UE-Application Server delay metric, where:

UE-Application Server delay = UE-UPF delay + UPF-Application Server delay.

However, it is understood that other metrics, such as available capacity or cost can be used, either alone or in combination with other metrics.

It is further assumed that the Session Management Function is aware of UPF-Application Server delays. The Session Management Function may be aware of this information in a number of different ways. For example, the information may be available through configuration of the SMF (possibly via proprietary methods upon agreement between the 5GS provider and the Application Server provider), or it is obtained via actual measurements performed between UPF and Application Server, possibly requested by an AF via a NEF Application Programming Interface (such as, for example, described above in relation to Figure 7).

These entities may exchange signals as illustrated in Figure 8.

At 8001, the application function 807 signals information to the PCF in the 5G core network 806. It is understood that this information may be transmitted in an alternative way. Moreover, it is understood that this information may be transmitted through entities not shown in the present Figures. This information may indicate that a service addressed by a Fully Qualified Domain Name or a domain has specific delay requirements and can be served by a specified list of Edge Application Servers. This information may indicate that the 5G system may apply special handling when a UE connects to that Fully Qualified Domain Name or a Fully Qualified Domain Name within that domain. In other words, the information may enable the application function 808 to register fqdn.domain.com with special quality of service delay requirements. This may be with respect to a specific data network name and/or network slice identifier, and/or a category or group of users.

Therefore, this information may comprise a data network name and slice information (e.g. type, slice identifier, etc.), specific for a UE and/or a UE group.

Although 8001 is shown with only one application function, it is understood that multiple application functions may provide the information of 8001 to the 5G core network 806.

On receipt of the information, the 5G core network 806 (e.g. the policy control function) may use the information received from all the application functions to build Policy Charging and Control rules. These rules may be provided to the Session Management Function in association with a PDU Session that meets the target criteria set by the application functions.

At 8002, the Session Management Function 805 may establish a PDU session for the UE 801.

Therefore, at 8003, at least some of the information (or data derived from information) received at 8001 may be forwarded to the Session Management Function 805. The information forwarded in 8003 may comprise Policy Charging and Control rules. The entity in the 5G core network 507 that forwards this information may be, for example, a policy control function. The Session Management Function may configure the Local DNS resolver with information about DNS query handling in case such information is not UE location dependent. The information may contain a list of Fully Qualified Domain Names/domains for which Local DNS resolver may have to apply specific DNS related processing for the specific UE. A specific UE may be identified in a number of different ways, including, for example, by its IP address. This assumes no network address translation is performed between the UPF acting as PDU Session Anchor and the Local DNS resolver.

If the information was not UE location dependent, the Session Management Function 805 may provide a list of information to build Extension Mechanisms for DNS Client Subnet option values (such as in the form of an IP subnet) and next hop DNS resolver address(es) (such as in the format of an IP address or Fully Qualified Domain Name) combinations to use when serving UEs DNS queries. In practice each combination may correspond to a specific PDU Session Anchor UPF candidate. For example, *.blackjack.game.com (for the target application FQDN or domain with possible wildcarding in the definition of the target domain) : {20.30.40/24, 'null'; 40.50.60/24; 'null'; 'null', 11.12.13.14}, may prompt the Local DNS resolver to issue three queries related with received DNS requests targeting any domain matching *.blackjack.game.com: first with Extension Mechanisms for DNS Client Subnet option value 20.30.40/24 directly toward the authoritative server, second with Extension Mechanisms for DNS Client Subnet option value 40.50.60/24 directly to the authoritative DNS server, and third with no Extension Mechanisms for DNS Client Subnet option value via next hop resolver in IP address 11.12.13.14. (Note that this syntax is merely an example.)

If the list is UE location dependent, it cannot be configured at this point but will be provided at step 8007. In this case the Session Management Function flags that there are UE IP address specific rules for this Fully Qualified Domain Name or domain, so that Local DNS resolver needs to request or subscribe to them specifically.

At 8004, the UE 801 receives an indication that its PDU session has been established and may receive the address of the Local DNS resolver selected at step 8003. In the present case, this allocated DNS resolver is a Local DNS resolver. From the UE perspective, this allocation of a local DNS resolver may be seen as a normal DNS resolver configuration using an applicable configuration protocol, such as the Protocol Configuration Option or via the Dynamic Host configuration Protocol for example. In both cases, the Session Management Function is involved and can influence which Local DNS resolver address/instance is given to which UE.

At 8005, the UE 801 issues a DNS query to its configured DNS resolver for a specific Fully Qualified Domain Name. The request is sent to the Local DNS resolver in the present case because the Local DNS resolver is the DNS resolver configured in the UE.

At 8006, the Local DNS resolver checks if the Fully Qualified Domain Name matches with any of the Fully Qualified Domain Names or domains with special handling rules. If no match is found, the Local DNS resolver will operate in a normal DNS resolver mode, possibly making just a single DNS query to the authoritative DNS server without any DNS Extension Mechanisms for DNS Client Subnet option or a default option corresponding to a default UPF.

If there are no -up-to-date UE (location) dependent rules for the Fully Qualified Domain Name, at 8007, the Local DNS resolver requests these from the Session Management Function 805 using UE's IP address as the key. The Session Management Function 805 considers the UE's current location and responds with DNS query handling rules that are relevant to UE's current location and QoS/delay requirements received from the application function. This means that instead of giving the Local DNS resolver all combinations corresponding to all possible PDU Session Anchor UPFs for the DNN or slice, only those close or meaningful to the UE's current location are given. Using an example syntax similar information as described above may be provided:

*.blackjack.game.com: UE IP: 10.11.12.13: {20.30.40/24, 'null'; 40.50.60/24; 'null'; 'null', 11.12.13.14} where the only difference is that this rule is specific to a specific UE. The Local DNS resolver may cache the Session Management Function responses so that it would not need to run through all the above steps every time a UE makes a query to a Fully Qualified Domain Name requiring special handling belonging to a domain for which it still has a valid DNS query handling rule.

The Session Management Function 805 may use the delay requirements related with the domain to determine whether to provide only one or multiple with DNS query handling rules.

At 8008, the Local DNS resolver acts as a DNS resolver and issues queries on behalf of the UE according to configuration given determined at 8007 or 8003. This means that the local DNS resolver may issue multiple queries with different Extension Mechanisms for DNS Client Subnet option values and/or via different next hop resolvers and may thus get back different results in each query.

At 8009, the Local DNS resolver aggregates the results of the DNS responses and provides them to the Session Management Function 805, waiting for Session Management Function response. The results provided to the Session Management Function may be provided in the form of a list of an Extension Mechanisms for DNS Client Subnet option value and next hop resolver combinations, and include IP addresses provided by the authoritative DNS server for the query done with that combination. As an example, syntax:

20.30.40/24: 100.101.102.103, 100.101.102.110,

may be provided, where the first value is the Extension Mechanisms for DNS Client Subnet option subnet value and the list after it contains the IP addresses provided by the authoritative DNS server when that Extension Mechanisms for DNS Client Subnet option value was used in the query.

At 8010, the SMF 805 may determine a "best" UPF and Application Server combination. This best UPF and Application Server combination may be determined in dependence on the DNS results from Local DNS resolver, on delays from UE (5G AN) to UPF(s), and on the delays from UPF(s) to Application Server(s). For example, the "best" combination may be the combination with lowest value for UE-UPF delay + UPF-Application Server delay, where the Application Server corresponds to the first IP address provided by the authoritative DNS server in its response corresponding to the specific UPF.

At 8011, if the UPF is not yet a PDU Session Anchor for the UE's PDU session, the Session Management Function allocates the UPF as a PDU Session Anchor for the UE's PDU session. The Session Management Function may also add an uplink classifier or branching point rule on an Intermediate UPF to forward UE traffic to the Application Server via the chosen PDU Session Anchor UPF. If needed, the Session Management Function may set up an Intermediate-UPF.

At 8012, the SMF 805 responds to Local DNS resolver request made in 8009 by providing the Local DNS resolver with the information of which DNS response/combination was considered best in 8011. The Local DNS resolver may cache both DNS responses as well as Session Management Function responses so that it would not need to run through all the above steps every time a UE makes a query to a Fully Qualified Domain Name requiring special handling.

At 8013, the Local DNS resolver provides a DNS response to the UE 801 using information provided by Session Management Function in 8012.

At 8014, the UE starts to send packets to the Application Server IP address provided in DNS response. The packets are forwarded to the chosen PDU Session Anchor UPF based on the uplink classifier /branching point rule in the Intermediate-UPF.

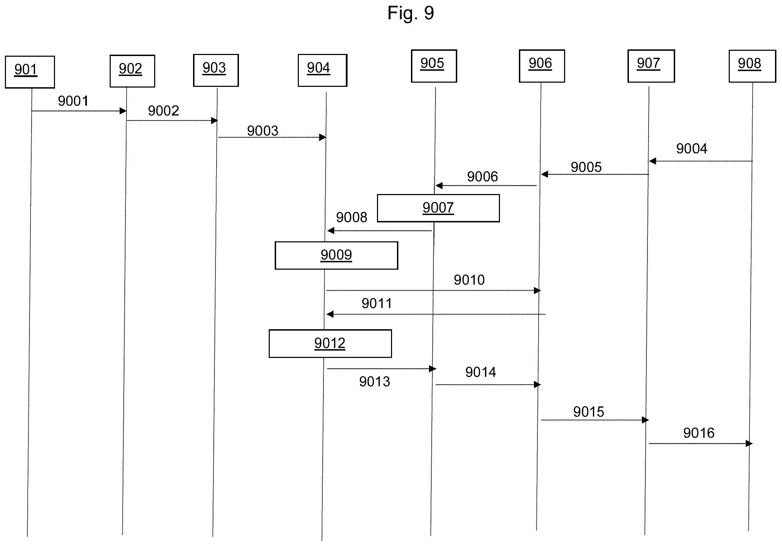

The second example mechanism is now discussed with reference to Figure 9, which considers a non-roaming case in which the Local DNS resolver acts as an authoritative DNS server.

Figure 9 shows an application 901, an application function 902, a 5G core network 903, a session management function 904, a local DNS resolver 905, a UPF 906, a radio access network 907, and a UE 908.

At 9001, the application sends an application registration request to the application function. The application request may comprise an application identifier, a fully qualified domain name, a data network name, a slice identifier, quality of service information and the like. In other words, the Application may provide the Application IP address, Its Fully Qualified Domain Name, Supporting DNN, S-NSSAI, its location i.e. DNAI and end-to-end Quality of Service (Latency requirement)Info to AF, as part of its registration once application is instantiated at a particular DNAI.

At 9002, the application function may use existing PDF management/traffic influence Application Programming Interface to convey the information received at 9001 to the core network. In other words, the AF may utilize the API exposed by the core network or Update to provide the same Info to the core network.

At 9003, the core network (e.g. the policy control function) may signal the SMF. This signalling may indicate update the policy control rules in the SMF based on the information received at 9002. In other words, the SMF may get notified about this application data as it will be subscribed that to UDR/PCF, and the SMF may store the Fully Qualified Domain Name, Application IP address, DNN; S-NSSAI, DNAI and Quality of Service info as an record for further consumption.

At 9004, the UE may send a DNS query to the radio access network. This query may comprise a Fully Qualified Domain Name. For example, in the present case, the name blacknut@123.com may be included. In other words, once the DNS query sent by UE reaches the Local DNS resolver, the Local DNS resolver will forward the Fully Qualified Domain Name along with UE IP address to Session Management Function, if the Fully Qualified Domain Name matches with the preconfigured Fully Qualified Domain Name at Local DNS resolver.

At 9005, the DNS query is passed to the UPF from the (radio) access network.

At 9006, the DNS query is passed from the UPF to the local DNS resolver.

At 9007, if the fully qualified domain name in the query matches with one configured in the local DNS resolver, the local DNS determines to send the request to the SMF along with the UE's IP address.

At 9008, the Local DNS resolver may forward the fully qualified domain name to the SMF.

Once the Session Management Function gets the Fully Qualified Domain Name, the Session Management Function may fetch the records that it has stored in 8004 for that Fully Qualified Domain Name at 9009. From that list of records for that Fully Qualified Domain Name, the Session Management Function may come to know which Application Servers are providing services to the Data Network name and network slice identifier (e.g. S-NASSAI) for which the UE has PDU session. There may be multiple instances of the same application type (Fully Qualified Domain Name) which will be providing services to different Data Network name and network slice identifier.

At 9010, the SMF signals the UPFs to obtain delay times for the UPFs for the same application/fully qualified domain name. This may be performed, for example, using a UPFs Data Network Access Identifier value.

At 9011, the SMF may receive a response from the UPFs that comprises the delay times.

At 9012, the Session Management Function may check for the current interface delays (e.g. an N3 and N6 interface delays) between the all UPFs and Application Servers combinations to find the most suitable/best UPF and AF pair. Steps 9010 to 9013 may take place before step 9004 i.e. as a background processing of the SMF. Steps 9010 to 9013 may take place before step 9004 i.e. as a background processing of the SMF.

At 9013, the Session Management Function returns at least one selected "best" UPF and AF pair to the Local DNS resolver. For example, the Session Management Function may provide a single selected "best" Application Server IP address or a weighted list of Application Server IP addresses to the Local DNS resolver.

At 9014, the Local DNS resolver returns to, the UPF 907, the DNS response including the Application Server IP addresses, which forwards this DNS response via the (radio) access network at 9015, for forwarding to the UE at 9016.

As an extension to this, the case of a home routed roaming scenario is considered.

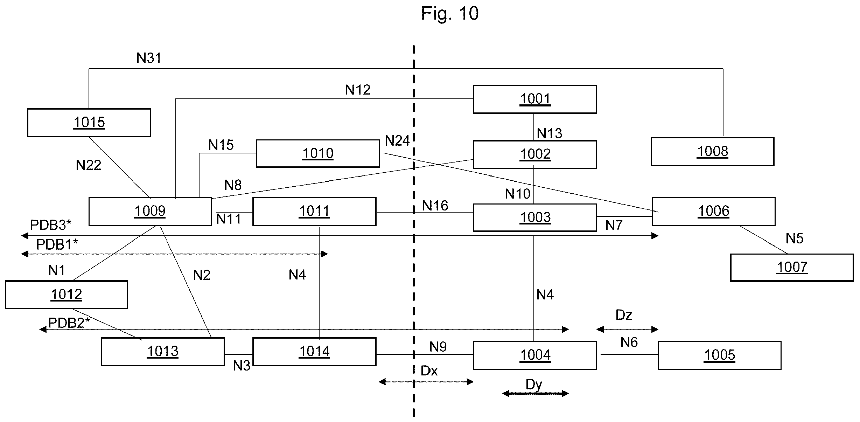

An architecture for this is illustrated with respect to Figure 10.

Figure 10 shows a network architecture comprising an Authentication Server Function 1001, a Unified Data Management function 1002, a Home-SMF 1003, a UPF 1004, a Data network 1005, a Home-Policy Control Function 1006, an AF 1007, a Home-Network Slice Selection Function 1008, an AMF 1009, a Visitor-PCF 1010, a Visitor-SMF 1011, a UE 1012, an Access Network Access Network 1013, a UPF 1014, and a Visitor- Network Slice Selection Function 1015

Authentication Server Function 1001 is connected to Unified Data Management function 1002 via an N13 interface, and to AMF 1009 via an N12 interface.

Unified Data Management function 1002 is connected to Authentication Server Function 1001 via an N13 interface, to Home-SMF 1003 via an N10 interface, and to AMF 1009 via an N8 interface.

Home-SMF 1003 is connected to Unified Data Management function 1002 via an N10 interface, to Home-Policy Control Function 1006 via an N7 interface, to Visitor-SMF 1011 via an N16 interface, and to UPF 1004 via an N4 interface.

UPF 1004 is connected to Home-SMF 1003 via an N4 interface, to Data network 1005 via an N6 interface, and to UPF 1014 via an N9 interface. UPF 1004 is also connected to itself via and N9 interface (not shown).

Data network 1005 is connected to UPF 1004 via an N6 interface.

Home-Policy Control Function 1006 is connected to Home-SMF 1003 via an N7 interface, to Home-Policy Control Function 1006 via an N5 interface, and to Visitor-PCF 1010 via an N24 interface.

AF 1007 is connected to Home-Policy Control Function 1006 via an N5 interface.

Home-Network Slice Selection Function 1008 is connected to Visitor- Network Slice Selection Function 1015 via an N31 interface.

AMF 1009 is connected to Visitor- Network Slice Selection Function 1015 via an N22 interface, to Authentication Server Function 1001 via an N15 interface, to Unified Data Management function 1002 via an N8 interface, to Visitor-PCF 1010 via an N15 interface, to Visitor-SMF 1011 via an N11 interface, to UE 1012 via an N2 interface and to UE 1012 via an N1 interface.

Visitor-PCF 1010 is connected to AMF 1009 via an N15 interface, and to Home-Policy Control Function 1006 via an N24 interface.

Visitor-SMF 1011 is connected to UPF 1014 via an N4 interface, to Home-SMF 1003 via an N16 interface, and to AMF 1009 via an N11 interface.

UE 1012 is connected to AMF 1009 via an N1 interface, and to Access Network 1013.

Access Network 1013 is connected to AMF 1009 via an N2 interface, to UE 1012, and to UPF 1014 via an N3 interface.

UPF 1014 is connected to Access Network 1013 via an N3 interface, to UPF 1004 via an N9 interface and to N11 via an N4 interface. UPF 1014 is also connected to itself via and N9 interface (not shown).

Visitor- Network Slice Selection Function 1015 is connected to AMF 1009 via interface N22, and to Home-Network Slice Selection Function 1008 via interface N31.

Figure 10 also shows where delays marked Dx, Dy, Dz, PDB1, PDB2*, and PDB3* may arise.

As depicted the overall end-to-end delay roaming may comprise two different factors:

$$PDB1 + D_x + D_y = PDB2*$$

$$PDB2* + D_z = PDB3*$$

Current 3GPP mechanisms only consider PDB2*.

In the following, it is assumed that the Fully Qualified Domain Name, end-to-end QOS related to the Fully Qualified Domain Name and the UE ID is available to the Session Management Function. This may be made available, for example, via the AF traffic influence interface. The Session Management Function may also have instructed the UPF/Local DNS resolver (e.g. via an N4 interface) to match the Fully Qualified Domain Name for UE and to notify Session Management Function via the same interface.

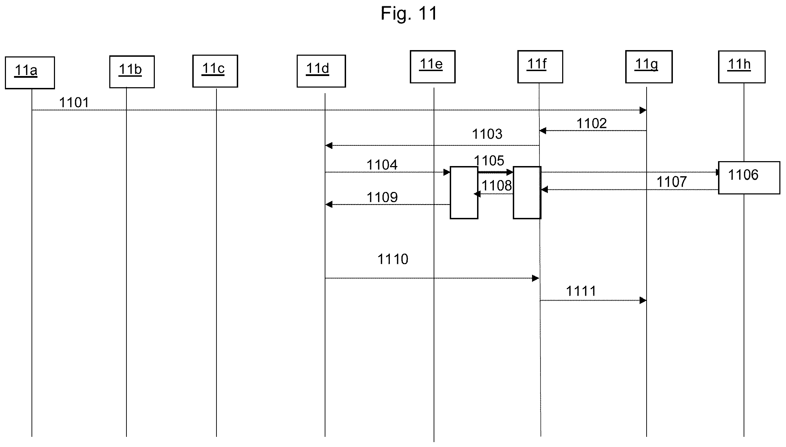

Figure 11 shows signaling between a UE 11a, an access network 11b, an AMF 11c, a Visitor or Intermediate SMF 11d, a Visitor or Intermediate UPF 11 e, a Home SMF 11f, a home user plane function or local DNS resolver 11g and an application function 11h.

At 1101, the UE sends a DNS query for Fully Qualified Domain Name to the Home-UPF.

At 1102, the Home-UPF notifies the Home-Session Management Function about Fully Qualified Domain Name

At 1103, the Home-Session Management Function notifies the Visitor-Session Management Function to start re-selection of a UPF and Application Server. This notification may comprise sending the requested Fully Qualified Domain Name and related end-to-end Quality of Service (e.g. delay, jitter, error rate, packet loss, etc.).

Optionally, the Visitor-Session Management Function may notify the AMF by sending the requested Fully Qualified Domain Name and related end-to-end Quality of Service (e.g delay, jitter, error rate, packet loss and etc).

If the AMF is notified, the AMF may re-select Visitor-Session Management Function for the requested Fully Qualified Domain Name and related end-to-end Quality of Service and return the result to the Visitor-Session Management Function.

At 1104, the Visitor-Session Management Function sends a query to Visitor-NRF. The query may comprise a slice identifier (e.g. Network Slice Selection Assistance Information (NSSAI)) and/or end-to-end Quality of Service and Fully Qualified Domain Name for possible Visitor-UPFs.

At 1105, the Visitor-NRF forwards the requested end-to-end Quality of Service and Fully Qualified Domain Name and a list of IP address of candidate Visitor-UPFs associated with "consumed" end-to-end Quality of Service for the Visitor-PLMN part to the Home-NRF.

If the Home-NRF is allowed to by the current network policy, the Home-NRF may then add for each of the Visitor-UPFs the Home-NRF's candidate Home-UPFs with associated "consumed" Quality of Service information to form pairs. This information may be stored locally. Based on this list, the Home-NRF may order the pairs into an order of preference and creates new list containing only the IP addresses of the PDU Session Anchor Home-UPF associated with the resulting Quality of Service and Fully Qualified Domain Name. This list of IP addresses may be shared with the application function. Based on measurement/or internal/external database accesses the NRF may add a Quality of Service to the pairs and send that list to the application function for consideration.

It is understood that the Home-PLMN may remove Visitor-PLMN IP address and instead only reveal the endpoint address of Home-PLMN to the application function.

At 1106, the application function may take into account the potentially consumed Quality of Service, the signalled Quality of Service for the Fully Qualified Domain Name in question, and the load of the candidate Application Server(s) when selecting the Application Server/DNAI for the Fully Qualified Domain Name.

At 1107, the application function may respond to the Home-NRF with a list of preferred pairs of Application Server/DNAI and Home-PLMN UPF addresses

At 1108, the Home-NRF may or may not remove pairs of Application Server/DNAI and Home-PLMN UPFs, before sending a response further down to the Visitor-NRF.

At 1109, the Visitor-NRF forwards the list received in 1108 to the Visitor-Session Management Function.

At 1110, the Visitor-Session Management Function selects one pair and re-allocates Visitor-UPF and sends PDU session modification request with the associated Application Server IP address and the Home-UPF as part of the selected pair to the Home-Session Management Function.

At 1111, the Home-Session Management Function allocates the Home-UPF, sends a PDU session modification request to the Visitor-Session Management Function and further instructs the Home-UPF (e.g. via the N4 interface) to send a DNS response back to the UE.

The (Home-)SMF may know the Fully Qualified Domain Name and the related end-to-end Quality of Service for the service in question.

In this procedure it is assumed that the Local DNS resolver is collocated with the initial UPF based on the AF traffic influence interface. This may be beneficial in order to reduce the number of transactions compared to the standalone Local DNS resolver. However, it is understood that other architectural arrangements may exist.

This described procedure does not reveal network internal information to the neighbour network. However, IP addresses pointing to network borders are shared, as they anyway are known to the networks participating.

The following provides some further potential features for matching Fully Qualified Domain Name in the UPF/Local DNS resolver. In particular, an instruction may be received (e.g. over an N4 interface) from a Session Management Function, to perform a DNS query match at the UPF /Local DNS resolver and report the result to Session Management Function

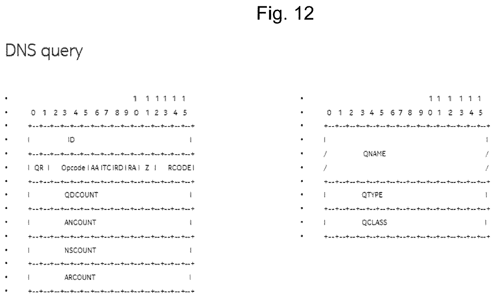

Figure 12 illustrates potential fields that may be included as part of a DNS query.

As mentioned above, the Session Management Function may instruct the UPF/Local DNS resolver via an interface (such as the N4 interface) by sending of a list of Fully Qualified Domain Names to be matched in DNS queries. For that, the UPF may detect Internet Protocol (IP) packets that are being sent uplink from the UE towards the network with the port number associated with the DNS protocol (e.g. port number 53) using a matching algorithm.

In addition to the matching algorithm, if the OPCODE in the request indicates that the request being made is a "standard query", the algorithm in the UPF shall count 12 bytes beginning with the IP payload, which is the number of bytes to reach/point to the QNAM (where the Fully Qualified Domain Name is located).

For example, a matching algorithm may suggest that the first octet of the QNAME be read, and read as many bytes in the first part of the domain name, as indicated in the first length octet. If the next length octet is zero, the algorithm is stopped. If the next length octet is non-zero, the next part of the domain name may be read and next length octet is read to check whether to continue or stop the algorithm if the length octet is zero.

Once the full domain name is collected, the domain name may be compared with the Fully Qualified Domain Name signalled by the Session Management Function to the UPF (e.g. via the via N4 interface). Alternatively the UPF may compare the first part of the domain name being received via the GTP-U with the first part of the Fully Qualified Domain Names received via the interface, before the following parts are subsequently compared with each other in order to match the Fully Qualified Domain Name. If a match is found the Fully Qualified Domain Name is reported to the Session Management Function for further usage.

After the Session Management Function is evaluated the Fully Qualified Domain Name and selected the corresponding UPF, the Session Management Function instructs the UPF to send the DNS response with the IP address of the Application Server as appropriate.

The UPF may host a DNS entity with decryption and encryption capability, so that the new procedure also does work in that case.

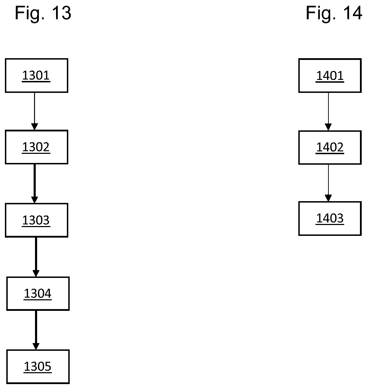

A general overview of some of the principles presented in the examples above is now provided with reference to Figures 13 to 16.

Figure 13 illustrates potential actions that may be performed by a network apparatus, such as by a (local) DNS resolver.

Figure 13 shows potential operations that may be performed by a network apparatus for a domain name resolver, such as a local DNS resolver. This network apparatus may interact with the network apparatus performing the actions described in respect of Figure 14.

At 1301, the apparatus receives, from a network entity, a request to resolve a domain name for a client.

At 1302, the apparatus sends domain name queries corresponding to one or each of a plurality of user plane functions that may be associated with the client. Therefore, the apparatus may send multiple domain name queries corresponding to each of the plurality of user plane functions. These multiple domain name queries may be sent in parallel. These multiple domain name queries may be sent in at substantially the same time.

At 1303, the apparatus receives responses to the domain name queries.

At 1304, the apparatus determines which domain name query response to send for the received request.

At 1305, the apparatus sends the determined domain name query response to the client.

Said network entity may be a session management function (such as described in relation to figure 14). In such a case, the apparatus may determine the plurality of user plane functions by receiving addressing information related with these user plane functions from the session management function. The addressing information may be Internet Protocol addressing information.

Said network entity may be a session management function (such as described in relation to figure 14). In such a case, said determination which domain name query response to send for the received request may comprise receiving from the session management function information on the domain name query response to send for the received request.

Said network entity may be a session management function (such as described in relation to figure 14). In such a case, said determination which domain name query response to send for the received request may comprise: sending to the session management function a list of associations between an addressing information related with a user plane function and an address in a domain name query response; and receiving from the session management function information on the list of associations. The addressing information and the address may be IP internet addressing information and an IP address respectively.

The request to resolve a domain name may be dependent on at least one property of the client. For example, the at least one property may comprise at least one of a location of the client, a subscription of the client, and a group membership of the client.

Figure 14 shows potential operations that may be performed by a network apparatus for a session management function. This network apparatus may interact with the network apparatus performing the actions described in respect of Figure 13.

At 1401, the network apparatus sends, to one or a plurality of addressing information related with user plane functions in order to guide the domain name resolver processing to resolve a domain name associated with a client. The addressing information may be Internet Protocol addressing information.

At 1402, the network apparatus may receive, from the domain name resolver, a response relating to a one or plurality of user plane functions that may be associated with the client.

At 1403, the network apparatus may select at least one combination of at least one of the user plane functions and an associated Application Server to provide a service to the client based on the received response.

Said selecting may be performed in dependence on a delay from the client to each of the plurality of user plane functions and on a delay from each of the plurality of user plane functions to each of a plurality of Application Servers comprising the associated Application Server.

The request to resolve a domain name may be dependent on at least one property of the client. For example, the at least one property may comprise at least one of a location of the client, a subscription of the client, and a group membership of the client.

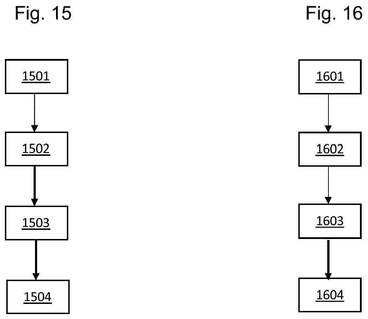

Figure 15 shows potential operations that may be performed by a network apparatus for a domain name resolver, such as a local DNS resolver. This network apparatus may interact with the network apparatus performing the actions described in respect of Figure 16.

At 1501, the network apparatus may receive, a request to resolve a domain name associated with a client.

At 1502, the network apparatus may determine whether the received domain name matches a predetermined domain name

At 1503, when the received domain name matches the predetermined domain name, send addressing information for the client and the received domain name to a session management function.

At 1504, the network apparatus may from the session management function at least one Application server address of one combination of at least one user plane function and an associated Application Server to provide a service to the client. The network apparatus may send the received combination to the client.

The determining a plurality of Application Servers may comprise exchanging signalling with the session management function.

The plurality of Application Servers may be dispersed across a home communication network and a Visitor communication network.

Figure 16 shows potential operations that may be performed by a network apparatus for a session management function. This network apparatus may interact with the network apparatus performing the actions described in respect of Figure 15.

At 1601, the network apparatus may receive from a domain name resolver addressing information related with user plane functions for a client and a domain name.

At 1602, the network apparatus may use the received domain name to determine a plurality of Application Servers for providing the service to the client.

At 1603, the network apparatus may select at least one combination of at least one of the user plane functions and an associated Application Server to provide a service to the client based on respective delays associated with the at least one combination.

At 1604, the network apparatus may send an indication of the at least one the at least one Application server address of one combination to the domain name resolver.

The apparatus may be caused to exchange signalling with the at least one user plane function for use with determining the plurality of Application Servers.

The plurality of Application Servers may be dispersed across a home communication network and a Visitor communication network.

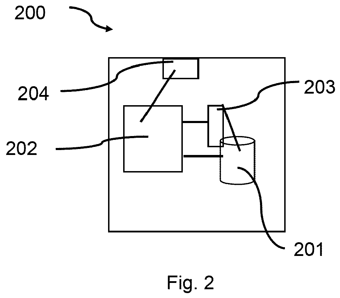

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR etc. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example the control apparatus 200 or processor 201 can be configured to execute an appropriate software code to provide the control functions.

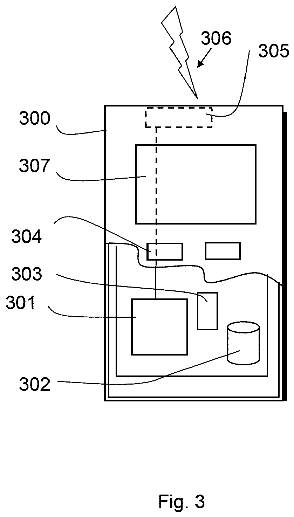

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

The wireless device 300 may receive signals over an air or radio interface 306 via appropriate apparatus for receiving and may transmit signals via appropriate apparatus for transmitting radio signals. In Figure 3 transceiver apparatus is designated schematically by block 305. The transceiver apparatus 305 may be provided for example by means of a radio part and associated antenna arrangement. The antenna arrangement may be arranged internally or externally to the wireless device.

A wireless device 300 is typically provided with at least one data processing entity 301, at least one memory 302 and other possible components 303 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 704. The user may control the operation of the wireless device by means of a suitable user interface such as key pad 304, voice commands, touch sensitive screen or pad, combinations thereof or the like. A display 307, a speaker and a microphone can be also provided. Furthermore, a wireless communication device may comprise appropriate connectors (either wired or wireless) to other devices and/or for connecting external accessories, for example hands-free equipment, thereto.

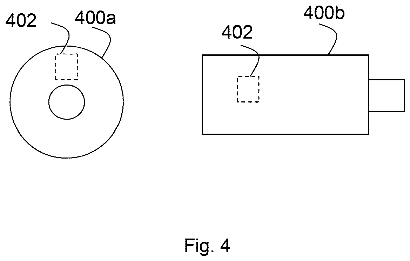

Figure 4 shows a schematic representation of non-volatile memory media 400a (e.g. computer disc (CD) or digital versatile disc (DVD)) and 400b (e.g. universal serial bus (USB) memory stick) storing instructions and/or parameters 402 which when executed by a processor allow the processor to perform one or more of the steps of the methods of Figure 10.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figure 10, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:

(a) hardware-only circuit implementations (such as implementations in only analogue and/or digital circuitry);
(b) combinations of hardware circuits and software, such as:

(i) a combination of analogue and/or digital hardware circuit(s) with software/firmware and
(ii) any portions of hardware processor(s) with software (including digital signal processor(s)), software, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

**Claims**

1. An apparatus for a domain name resolver, the apparatus comprising:

at least one processor; and
at least one memory including computer program code;
the at least one memory and the computer program code being configured to,
with the at least one processor, cause the apparatus at least to:

receive from a network entity a request to a resolve domain name for a client;
send domain name queries corresponding to one or each of a plurality of user plane functions that may be associated with the client;

receive responses to the domain name queries;
determine which domain name query response to send for the received request; and
send the determined domain name query response to the network client.

2. An apparatus as claimed in claim 1, wherein said network entity is a session management function and wherein the apparatus is caused to determine the plurality of user plane functions by receiving addressing information related with these user plane functions from the session management function.

3. An apparatus as claimed in any of preceding claim, wherein said network entity is a session management function and wherein said determination which domain name query response to send for the received request comprises receiving from the session management function information on the domain name query response to send for the received request.

4. An apparatus as claimed in any preceding claim, wherein said network entity is a session management function and wherein said determination which domain name query response to send for the received request comprises:

sending to the session management function a list of associations between an addressing information related with a user plane function and an address in a domain name query response; and
receiving from the session management function information on the list of associations.

5. An apparatus for a session management function, the apparatus comprising:

at least one processor; and
at least one memory including computer program code;
the at least one memory and the computer program code being configured to, with the at least one processor, cause the apparatus at least to:

send, to a domain name resolver, at least one of a plurality of addressing information related with user plane functions in order to guide the domain name resolver processing to resolve a domain name associated with a client;
receive, from the domain name resolver, a response relating to a plurality of user plane functions that may be associated with the client; and
select at least one combination of at least one of the user plane functions and an associated Application Server to provide a service to the client based on the received response.

6. An apparatus as claimed in claim 5, wherein said selecting is performed in dependence on a delay from the client to each of the plurality of user plane functions and on a delay from each of the plurality of user plane functions to each of a plurality of Application Servers comprising the associated Application Server.

7. An apparatus as claimed in any preceding claim, comprising resolving the request to resolve a domain name in dependence on at least one property of the client.

8. An apparatus as claimed in claim 7, wherein the at least one property comprises at least one of a location of the client, a subscription of the client, and a group membership of the client.

9. An apparatus for a domain name resolver, the apparatus comprising:

at least one processor; and
at least one memory including computer program code;
the at least one memory and the computer program code being configured to, with the at least one processor, cause the apparatus at least to:

receive, a request to resolve a domain name associated with a client;
determine whether the received domain name matches a predetermined domain name;
when the received domain name matches the predetermined domain name, send addressing information for the client and the received domain name to a session management function; and
receive from the session management function at least one Application server address of one combination of at least one user plane function and an associated Application Server to provide a service to the client.

**10.** An apparatus for a session management function, the apparatus comprising:

at least one processor; and
at least one memory including computer program code;
the at least one memory and the computer program code being configured to, with the at least one processor, cause the apparatus at least to:

receive from a domain name resolver addressing information related with user plane functions for a client and a domain name;
use the received domain name to determine a plurality of Application Servers for providing the service to the client;
select at least one combination of at least one of the user plane functions and an associated Application Server to provide a service to the client based on respective delays associated with the at least one combination; and
send the at least one Application server address of one combination to the domain name resolver.

**11.** An apparatus as claimed in claim 10, wherein the apparatus is caused to exchange signalling with the at least one user plane function for use with determining the plurality of Application Servers.

**12.** An apparatus as claimed in any of claims 9 to 11, wherein the plurality of Application Servers are dispersed across a home communication network and a Visitor communication network.

**13.** A method for an apparatus for a domain name resolver, the method comprising:

receiving, from a network entity a request to resolve a domain name for a client;
sending domain name queries corresponding to one or each of a plurality of user plane functions that may be associated with the client;
receiving responses to the domain name queries;
determining which domain name query response to send for the received request; and
sending the determined domain name query response to the client.

**14.** A method for an apparatus for a session management function, the method comprising:

sending, to a plurality of addressing information related with user plane functions in order to guide the domain name resolver processing to resolve a domain name associated with a client;
receiving, from the domain name resolver, a response relating to at least one of a plurality of user plane functions that may be associated with the client; and
selecting at least one combination of at least one of the user plane functions and an associated Application Server to provide a service to the client based on the received response.

**15.** A method for an apparatus for a domain name resolver, the method comprising:

receiving, a request to resolve a domain name associated with a client;
determining whether the received domain name matches a predetermined domain name;
when the received domain name matches the predetermined domain name, sending addressing information for the client and the received domain name to a session management function; and
from the session management function at least one Application server address of one combination of at least one user plane function and an associated Application Server to provide a service to the client.

**16.** A method for apparatus for a session management function, the method comprising:

receiving from a domain name resolver addressing information related with user plane functions for a client and a domain name;
using the received domain name to determine a plurality of Application Servers for providing the service to the client;
selecting at least one combination of at least one of the user plane functions and an associated Application Server to provide a service to the client based on respective delays associated with the at least one combination; and

sending the at least one Application server address of one combination to the domain name resolver.

EP 3 979 601 A2

Fig. 1

200

204

203

202

201

Fig. 2

Fig. 3

402   400a          402      400b

Fig. 4

EP 3 979 601 A2

Fig. 5

Fig. 6

Fig. 7

7001

7002

7003

7004

7005

7006

7007

7008

7009

7010

7011

701 702 703 704 705 706 707 708 709

EP 3 979 601 A2

Fig. 8

EP 3 979 601 A2

Fig. 9

Fig. 10

Fig. 11

# Fig. 12

## DNS query

```
                                      1  1 1 1 1 1
·          0  1  2  3  4  5  6 7 8 9 0  1  2  3  4  5
·         +--+--+--+--+--+--+--+--+--+--+--+--+--+--+--+--+
·         |              ID                               |
·         +--+--+--+--+--+--+--+--+--+--+--+--+--+--+--+--+
·         | QR |   Opcode |AA |TC |RD | RA |  Z  |  RCODE |
·         +--+--+--+--+--+--+--+--+--+--+--+--+--+--+--+--+
·         |            QDCOUNT                            |
·         +--+--+--+--+--+--+--+--+--+--+--+--+--+--+--+--+
·         |            ANCOUNT                            |
·         +--+--+--+--+--+--+--+--+--+--+--+--+--+--+--+--+
·         |            NSCOUNT                            |
·         +--+--+--+--+--+--+--+--+--+--+--+--+--+--+--+--+
·         |            ARCOUNT                            |
·         +--+--+--+--+--+--+--+--+--+--+--+--+--+--+--+--+
```

```
                                      1  1 1 1 1 1
·          0  1  2  3  4  5  6 7 8 9 0  1  2  3  4  5
·         +--+--+--+--+--+--+--+--+--+--+--+--+--+--+--+--+
·         |                                              |
·         /              QNAME                           /
·         /                                              /
·         +--+--+--+--+--+--+--+--+--+--+--+--+--+--+--+--+
·         |              QTYPE                           |
·         +--+--+--+--+--+--+--+--+--+--+--+--+--+--+--+--+
·         |              QCLASS                          |
·         +--+--+--+--+--+--+--+--+--+--+--+--+--+--+--+--+
```

Fig. 13

```
1301
  │
  ▼
1302
  │
  ▼
1303
  │
  ▼
1304
  │
  ▼
1305
```

Fig. 14

```
1401
  │
  ▼
1402
  │
  ▼
1403
```

Fig. 16

| 1601 | → | 1602 | → | 1603 | ⟶ | 1604 |

Fig. 15

| 1501 | ⇢ | 1502 | ⟶ | 1503 | ⟶ | 1504 |